# EUROPÄISCHE PATENTSCHRIFT

(11) **EP 4 416 087 B1**
(45) Veröffentlichungstag und Bekanntmachung des Hinweises auf die Patenterteilung: **24.12.2025**
(21) Anmeldenummer: 22800666.4
(22) Anmeldetag: 11.10.2022
(51) Int. Cl.: B65G 43/02, B65G 43/06, B65G 45/16

(54) **SYSTEM UND VERFAHREN ZUR ÜBERWACHUNG DES ZUSTANDS EINES FÖRDERBANDS EINER FÖRDERBANDANLAGE SOWIE EINE ENTSPRECHENDE FÖRDERBANDANLAGE**
SYSTEM AND METHOD FOR MONITORING THE STATE OF A CONVEYOR BELT OF A CONVEYOR-BELT INSTALLATION, AND A CORRESPONDING CONVEYOR-BELT INSTALLATION
SYSTÈME ET PROCÉDÉ DE SURVEILLANCE DE L'ÉTAT D'UNE BANDE TRANSPORTEUSE D'UNE INSTALLATION DE BANDE TRANSPORTEUSE, ET INSTALLATION DE BANDE TRANSPORTEUSE CORRESPONDANTE

(43) Veröffentlichungstag der Anmeldung: 21.08.2024
(73) Patentinhaber: Schulte Strathaus GmbH & Co. KG Fördertechnik Dichtungssysteme, 59457 Werl (DE)
(72) Erfinder: SCHULTE STRATHAUS, Michael, 58739 Wickede (DE)
(74) Vertreter: Hoffmann, Oliver
(86) Internationale Anmeldenummer: PCT/EP2022/078202
(87) Internationale Veröffentlichungsnummer: WO 2024/078697

(56) Entgegenhaltungen:
- CN-A- 113 772 375
- DE-A1- 102004 014 084
- DE-A1- 102018 123 799
- DE-U1- 202014 007 229

## Beschreibung

Die Erfindung betrifft ein System zur Überwachung des Zustands eines Förderbands einer Förderbandanlage. Das System weist eine Tragwelle und mindestens ein an der Tragwelle angeordnetes und Drehmoment übertragend mit der Tragwelle verbundenes Abstreifsegment auf. Zudem umfasst das System mindestens eine ortsfeste Halterung mit einem Haltelager, in dem die Tragwelle drehbar gelagert ist. Das System hat außerdem ein an der Halterung angeordnetes und mit der Tragwelle bewegungsmäßig gekoppeltes Bewegungselement und einen Sensor zur Überwachung des Zustands des Förderbands.

Des Weiteren betrifft die vorliegende Erfindung ein Verfahren zur Überwachung des Zustands eines Förderbands einer Förderbandanlage unter Verwendung eines Systems der vorgenannten Art.

Außerdem betrifft die vorliegende Erfindung eine Förderbandanlage mit einem Förderband und einem System der vorgenannten Art.

Förderbandanlagen verwenden ein sich bewegendes Förderband zum Transportieren von Schüttgütern, wie Sand, Kies, Kohle, Erz oder dergleichen, von einem Ort zu einem anderen Ort. Wenn das Schüttgut von dem Förderband am Ende einer Umlenkung herabfällt, bleibt manchmal ein Rest des Schüttgutes an dem Förderband haften. Eine Förderband-Abstreifeinrichtung kann dabei ein Abstreifsegment der vorgenannten Art umfassen. Dabei dient das Abstreifsegment dazu, am Förderband anhaftendes Schüttgut abzustreifen.

Typischerweise befindet sich ein erstes Abstreifsegment bzw. befinden sich erste Abstreifsegmente unmittelbar an der Umlenkwalze des Förderbandes als sogenannte Primärabstreifer. Am Untertrum des Förderbandes befindet sich in Laufrichtung des Förderbands hinter dem Primärabstreifer meist noch ein Sekundärabstreifer.

Die meist mehreren nebeneinander angeordneten Abstreifsegmente einer Förderband-Abstreifvorrichtung sind auswechselbar an einer meist drehbar und häufig auch zusätzlich linear verstellbaren Tragwelle befestigt, die sich quer zum Förderband erstrecken kann.

Es kann eine Anstelleinrichtung vorgesehen sein. Diese ist in der Regel mit einem oder beiden Enden der Tragwelle verbunden und kann über eine entsprechende Hebekonstruktion oder vorgespannte Federn dazu ausgebildet sein, die notwendige Vorspannung für die Förderband-Abstreifvorrichtung zu erzeugen. Mitunter weist die Anstelleinrichtung einen Antriebsmotor auf. Der Antriebsmotor wird dann von einer elektrischen oder elektronischen Steuerung angesteuert. Wenn vorliegend nur von einem Antriebsmotor die Rede ist, so schließt das eine Variante ein, bei der mehrere Antriebsmotoren vorgesehen sind, insbesondere jeweils ein Antriebsmotor an jedem Ende der Tragwelle.

**In** der Praxis sind Regelverfahren bekannt, mit denen der Zustand des Förderbandes optisch überwacht werden kann. Dies benötigt jedoch eine aufwendige Auswertung der Messergebnisse und ist zudem fehlerbehaftet, mit hohen Betriebs-, Wartungs- und Herstellungskosten verbunden. Sollte ein Schaden oder ein potenziell entstehender Schaden - beispielsweise durch anhaftendes Schüttgut - zu spät erkannt werden, so kann dies eine Beschädigung der gesamten Förderbandanlage bis hin zu einem Ausfall der Förderbandanlage bedingen und nur schwer abschätzbare Folgekosten hervorrufen. Gelangt beispielsweise Schüttgut in das Antriebssystem der Förderbandanlage, kann der Schaden beachtlich sein.

Das Dokument CN 113 772 375 A offenbart eine Förderbandanlage mit einer Abstreifvorrichtung, die auf einer Tragwelle angeordnet ist. Die Tragwelle ist in zwei ortsfesten Halterungen drehbar gelagert. Beide Enden der Tragwelle sind mit einer Spannvorrichtung versehen. Jede Spannvorrichtung umfasst unter anderem eine Spannhülse, die am Außenumfang der Tragwelle befestigt ist. Die Spannhülse ist mit einem Verbindungsblock verbunden, der mit einem Einstellloch durchbohrt ist. Eine Einstellstange ist in das Einstellloch eingeführt. Durch die Einstellung der Einstellstange kann sich die Spannhülse relativ zur Einstellstange über den Verbindungsblock bewegen. Die Einstellstange ist mit einer Einstellbaugruppe versehen. Zu dieser Einstellbaugruppe gehören neben zwei Magneten und einer Feder auch ein Drucksensor, mittels dem detektiert werden kann, ob zwischen der Abstreifvorrichtung und dem Förderband abgelöste Förderbandschichten, Materialblöcke, Kleinteile etc. vorhanden sind.

Das Dokument DE 10 2004 014084 A1 offenbart eine Vorrichtung **,** welche die Merkmale des Oberbegriffs des Anspruchs 1 beinhaltet, zur Überwachung einer Fördergurtanordnung mit einem Gurtreiniger, wobei dem Gurtreiniger wenigstens ein Sensor zugeordnet ist, der während des Betriebs wenigstens einen gurtspezifischen Parameter erfasst, wodurch eine den Gurtzustand charakterisierende Größe bestimmt werden kann. Dadurch soll eine kontinuierliche Zustandsüberwachung des Fördergurts ermöglicht werden.

Aus dem Dokument DE 10 2018 123799 A1 ist ein Gurtabstreifer, der ein Abstreifelement zur Reinigung eines Gurts aufweist, bekannt. Das Abstreifelement ist schwenkbar um eine Schwenkachse angeordnet. Zusätzlich ist ein Sensor mit zwei Sensorelementen zur Ermittlung eines Schwenkwinkels des Abstreifelements vom Gurt vorgesehen. Der Abstand zwischen den Sensorelementen stellt ein Äquivalent für den Winkelausschlag eines Schwenkarms dar. Der Abstand bzw. der Winkelausschlag wird über den berührungslos funktionierenden Sensor ermittelt, der ein Indexteil und ein Erfassungsteil aufweist. Mittels des Erfassungsteils kann die Position des beweglichen Indexteils, das an einem mit dem Abstreifelement gekoppelten beweglichen Element angeordnet ist, bestimmt werden.

Schäden am Förderband sollten möglichst frühzeitig, verlässlich und automatisiert erkannt werden, wobei Fehldetektionen (es wird auf einen Schaden geschlossen, obwohl tatsächlich kein Schaden vorliegt) möglichst vermieden werden sollten. Vorzugsweise wird bei Auftreten eines Schadens dessen Position am Förderband möglichst präzise detektiert.

Aufgabe der vorliegenden Erfindung ist es daher, ein System bzw. ein Verfahren zur effizienten bzw. zuverlässigen Überwachung des Zustands eines Förderbands einer Förderbandanlage bereitzustellen, insbesondere wobei Nachteile des Standes der Technik vermieden oder aber zumindest im Wesentlichen vermindert werden sollen.

Zur Lösung dieser Aufgabenstellung sieht die vorliegende Erfindung ein System zur Überwachung des Zustands eines Förderbands einer Förderbandanlage vor.

Das System umfasst eine Tragwelle und mehrere an der Tragwelle angeordnete und Drehmoment übertragend mit der Tragwelle verbundene Abstreifsegmente. Die Abstreifsegmente können insbesondere benachbart zueinander an der Tragwelle angeordnet sein. Die Abstreifsegmente können dazu ausgebildet sein, ein Abstreifen von an dem Förderband anhaftenden Fördergut zu gewährleisten.

Zudem umfasst das erfindungsgemäße System eine ortsfeste Halterung mit einem Haltelager, in dem die Tragwelle drehbar gelagert ist. An der Halterung ist ferner ein Bewegungselement des Systems angeordnet, wobei das Bewegungselement mit der Tragwelle bewegungsmäßig gekoppelt ist. Insbesondere ist das Bewegungselement drehfest und/oder verdrehfest mit der Tragwelle verbunden.

Erfindungsgemäß hat das System einen Sensor zur Überwachung des Zustandes des Förderbandes.

Die Abstreifsegmente, die Tragwelle und die Halterung sowie das Bewegungselement wirken derart zusammen, dass eine auf die Abstreifsegmente wirkende Kraft auf das Bewegungselement übertragen wird, wobei der Sensor derart angeordnet und ausgebildet ist, dass der Sensor eine charakteristische, insbesondere eine physikalische, Größe des Bewegungselementes erfasst.

Erfindungsgemäß ist der Sensor ortsfest an der Halterung angeordnet.

Die Erfindung ermöglicht es, mittels des Sensors den Zustand des Förderbandes zu überwachen bzw. Rückschlüsse auf den Zustand des Förderbandes zu ziehen, vorzugsweise zur Schadendetektion. Bei Versuchen, die beim Zustandekommen der Erfindung durchgeführt wurden, ist überraschenderweise festgestellt worden, dass ein Sensor, der insbesondere an der Halterung angeordnet sein kann, durch Überwachung des Bewegungselementes Rückschlüsse auf den Zustand des Förderbandes ermöglichen kann.

Die ortsfeste Anordnung des Sensors an der Halterung ermöglicht es, dass der Sensor auf vergleichsweise einfache Art mit dem Bewegungselement zusammenwirken kann, insbesondere wobei der Sensor benachbart zum Bewegungselement angeordnet ist. Dabei kann der Sensor vorzugsweise an das Bewegungselement angrenzen. Das Bewegungselement wiederum kann beweglich, insbesondere drehbar, an der Halterung gelagert sein. Somit kann die Halterung ein Zusammenwirken zwischen dem Sensor und dem Bewegungselement sicherstellen.

Insbesondere kann beispielsweise vorgesehen sein, dass die Abstreifsegmente in Kontakt mit dem Förderband sind, wobei bei Kontaktierung des Bereiches des Förderbandes, in dem ein Schaden vorhanden ist, das Zusammenwirken der Abstreifsegmente und des Förderbandes so verändert wird, dass die dadurch auf die Abstreifsegmente wirkende Kraft mittels des Sensors durch Zusammenwirken mit dem Bewegungselement erfasst werden kann.

Insbesondere kann das Bewegungselement auch beweglich, vorzugsweise schwenkbar, an der Halterung gelagert sein. Letztlich kann insbesondere der Sensor mit dem Bewegungselement so zusammenwirken, dass der Sensor eine Veränderung der Position des dem Förderband zugewandten Abstreifendes eines der Abstreifsegmente und/oder eine Veränderung der zur Inkontaktbringung des Abstreifendes mit dem Förderband aufzubringenden Anstellkraft zumindest mittelbar detektieren kann.

Vorzugsweise kann eine von dem Förderband auf das Abstreifende eines der Abstreifsegmente aufgebrachte Gurtmitnahmekraft zumindest mittelbar detektiert werden, insbesondere können Veränderungen der Gurtmitnahmekraft erfasst werden.

Beim Zustandekommen der Erfindung ist festgestellt worden, dass diese vorgenannten Veränderungen wiederum auf einen Gurtschaden hindeuten können.

Demnach gelingt es erfindungsgemäß, auf vergleichsweise einfache Art eine ökonomische, effiziente und sichere Überwachung des Förderbandes zu ermöglichen.

Insbesondere können erfindungsgemäß durch den Sensor und durch das Zusammenwirken des Bewegungselementes und des Sensors Rückschlüsse auf den Zustand des Förderbandes gezogen werden, vorzugsweise zur Schadendetektion.

Die von dem Sensor erfassten Lastdaten bzw. Messsignale können insbesondere ausgewertet werden, so dass beispielsweise eine Überprüfung auf ein Unterschreiten und/oder Überschreiten von Grenzwerten - die insbesondere einen vorgegebenen Bereich begrenzen - durchgeführt werden kann.

Insbesondere gelingt es erfindungsgemäß, ein mögliches Schadensereignis rechtzeitig zu identifizieren und insbesondere ebenfalls den Umfang eines möglichen Schadens abzuschätzen. Dies gewährleistet bevorzugt eine signifikante Reduktion der Betriebs- und Wartungskosten der gesamten Förderbandanlage.

Bevorzugt kann über den Sensor eine Bewegung des Bewegungselementes zumindest mittelbar erfasst werden, wodurch Rückschlüsse auf das Förderband gezogen werden können, indem das Bewegungselement mit der Tragwelle und die Tragwelle wiederum mit den Abstreifsegmenten verbunden ist. Insbesondere kann mittels des Sensors erfasst werden, wenn die Tragwelle bzw. die Abstreifsegmente eine solche Veränderung erfährt bzw. erfahren, dass die Abstreifsegmente außer Kontakt mit dem Förderband gebracht werden bzw. worden sind.

Bei einer besonders bevorzugten Ausführungsform der vorliegenden Erfindung ist vorgesehen, dass das System eine Anstelleinrichtung aufweist, mittels der die Tragwelle derart bewegbar ist, dass eine Oberfläche der Abstreifsegmente, insbesondere ein Abstreifende, mit dem Förderband in Kontakt bringbar ist, wobei die Anstelleinrichtung an der Halteeinrichtung angeordnet und/oder gelagert ist und ferner Drehmoment übertagend mit der Tragwelle verbunden ist. Das Bewegungselement kann mit der Anstelleinrichtung bewegungsmäßig gekoppelt oder Teil der Anstelleinrichtung sein.

Die Anstelleinrichtung kann insbesondere eine Anstellkraft auf die Abstreifsegmente übertragen, was das Abstreifende eines der Abstreifsegmente in Kontakt mit dem Förderband bringt. Bei einem Förderbandschaden bzw. Gurtschaden kann sich diese aufzuwendende Anstellkraft der Anstelleinrichtung verändern, insbesondere erhöhen. Eine solche Veränderung der aufzubringenden Anstellkraft kann dann erfindungsgemäß insbesondere mittels des Bewegungselements und mittels des Sensors erfasst werden.

Die Anstelleinrichtung kann bevorzugt an der Halterung - insbesondere außerhalb des Förderbandes - vorzugsweise zumindest mittelbar an einer Umlenkwalze des Förderbandes angeordnet und/oder gelagert sein.

Insbesondere kann der Sensor erfassen, wenn eines der Abstreifsegmente außer Kontakt mit dem Förderband gebracht wird bzw. worden ist und sich dadurch die Anstellkraft verändert bzw. verändert hat.

Letztlich kann die Anstelleinrichtung eine Vorspannkraft auf die Tragwelle aufbringen, die wiederum die Abstreifsegmente mit ihren Abstreifenden mit einer gewünschten Vorspannung an dem Förderband zur Anlage bringt. Die Vorspannung muss dabei insbesondere hoch genug sein, um am Förderband anhaftende Reste von Schüttgut sicher abzustreifen, sie darf aber bevorzugt auch nicht zu hoch sein, damit das Förderband nicht durch die Abstreifsegmente beschädigt wird.

Die Anstelleinrichtung kann mit einem oder einer Mehrzahl von Abstreifsegmenten zusammenwirken.

Insbesondere ist die Anstelleinrichtung an der Tragwelle angeordnet bzw. mit dieser verbunden und wirkt daher mit den an der Tragwelle angeordneten Abstreifsegmenten zusammen.

Besonders bevorzugt kann das Bewegungselement als frei drehbarer an der Halterung gelagerter Hebel oder als frei drehbares an der Halterung gelagertes Pendel ausgebildet sein.

Vorzugsweise ist das Bewegungselement drehfest und/oder verdrehfest mit der Tragwelle verbunden, wie dies zuvor erläutert worden ist. Eine solche Anordnung des Bewegungselementes ermöglicht es, dass das Bewegungselement insbesondere auch über die Tragwelle bewegungsmäßig mit den Abstreifsegmenten in einer besonders bevorzugten Ausführungsform gekoppelt ist, nämlich insbesondere auch dann, wenn die Abstreifsegmente drehfest mit der Tragwelle verbunden sind. Somit gelingt es durch die Verbindung über die Tragewelle eine derartige Veränderung der Abstreifsegmente zu erkennen bzw. über den Sensor zu erfassen, die auf einen Förderbandschaden hindeutet.

Alternativ oder zusätzlich kann vorgesehen sein, dass das Bewegungselement derart mit der Tragwelle verbunden ist, dass eine Belastung der Tragwelle eine translatorische Bewegung des Bewegungselementes bewirkt. Eine solche Anordnung bzw. Verbindung zwischen dem Bewegungselement und der Tragwelle ermöglicht es, dass durch das Zusammenwirken zwischen der Tragwelle und den Abstreifsegmenten und andererseits durch das Zusammenwirken zwischen dem Bewegungselement und der Tragwelle mittels des Sensors aufgrund der translatorischen Bewegung des Bewegungselementes der Zustand des Förderbandes zumindest mittelbar überwacht werden kann.

Letztlich kann eine Veränderung bei der translatorischen Bewegung des Bewegungselementes nach entsprechender Auswertung auf einen Förderbandschaden hindeuten, was durch die von dem Sensor erfassten Messdaten ermittelbar ist.

Bei einer weiteren bevorzugten Ausgestaltung des Erfindungsgedankens kann vorgesehen sein, dass der Sensor und das Bewegungselement derart angeordnet und ausgebildet sind, dass bei einer Bewegung des Bewegungselementes das Bewegungselement eine Kraft auf den Sensor ausübt, insbesondere gegen den Sensor drückt oder den Sensor zieht.

Dabei kann im normalen bzw. unbelasteten Zustand des Bewegungselementes vorgesehen sein, dass das Bewegungselement außer Eingriff mit dem Sensor ist.

Grundsätzlich kann aber auch in weiteren Ausführungsformen vorgesehen sein, dass selbst im normalen bzw. unbelasteten Zustand das Bewegungselement an dem Sensor anliegt.

Durch die Ausübung einer Kraft kann insbesondere der Sensor feststellen, ob ein Schaden am Förderband vorliegt und somit den Zustand des Förderbandes überwachen. Insbesondere kann eine Veränderung der Kraft festgestellt werden, die wiederum Rückschlüsse auf den Zustand des Förderbandes ermöglichen kann.

Vorzugsweise ist der Sensor derart angeordnet und ausgebildet, dass der Sensor eine vom Bewegungselement auf den Sensor ausgeübte Kraft erfasst. Durch die Erfassung dieser Kraft wird es dem Sensor ermöglicht, Messsignale zu erfassen, die wiederum zur Auswertung und zur Ermittlung des Zustandes des Förderbandes dienen können. Die Kraft kann dabei mittelbar oder unmittelbar erfasst werden. Unter einer mittelbaren Erfassung der Kraft wird insbesondere verstanden, dass der Sensor eine zur ausgeübten Kraft korrelierende physikalische Größe erfassen kann.

Bei einer weiteren bevorzugten Ausgestaltung ist der Sensor derart angeordnet und ausgebildet, dass der Sensor eine Veränderung der Position oder Winkellage des Bewegungselementes oder eine Beschleunigung des Bewegungselementes erfasst. Bei einer solchen Ausgestaltung sowohl des Bewegungselementes als auch des Sensors kann insbesondere eine translatorische und rotatorische Bewegung des Bewegungselementes bzw. eine Beschleunigung erfasst werden. Somit kann alternativ oder zusätzlich zur Kraft auch die Auslenkung des Bewegungselementes oder eine Veränderung der Bewegung des Bewegungselementes zur Schadensdetektion genutzt werden. Der Sensor kann somit auf unterschiedliche Weisen ausgebildet sein, ermöglicht jedoch jeweils insbesondere einen Rückschluss auf den Zustand des Förderbandes.

Bei einer besonders bevorzugten Ausgestaltung weist der Sensor einen Dehnungsmessstreifen auf oder ist als Dehnungsmessstreifen, Kraftsensor, piezoelektrischer Sensor, Potentiometer, Winkelsensor, Beschleunigungssensor oder magnetischer Näherungssensor ausgebildet. Die vorgenannten Ausbildungsformen des Sensors ermöglichen es, durch das Zusammenwirken zwischen dem Bewegungselement und dem Sensor den Zustand des Förderbandes zu überwachen. Erfindungsgemäß ist dabei festgestellt worden, dass unterschiedliche Messprinzipien dafür genutzt werden können, den Zustand des Förderbandes, insbesondere durch eine Veränderung der auf die Abstreifsegmente ausgeübten Kraft, feststellen zu können. Letztlich ist der Sensor insbesondere derart ausgebildet, dass eine Förderbandschadendetektion durchgeführt werden kann.

Die Ausbildung des Sensors als Dehnungsmessstreifen ist besonders bevorzugt, da sie eine effiziente, kostengünstige und zuverlässige Messmethode gewährleisten kann. Bei einem Dehnungsmessstreifen kann somit zumindest mittelbar die vom Bewegungselement auf den Sensor ausgeübte Kraft erfasst werden. Die diesbezügliche Kraft kann somit als Rückschluss für den Zustand des Förderbandes genutzt werden.

Vorzugsweise ist alternativ oder zusätzlich der Sensor derart ausgebildet, dass eine Auslenkung des Bewegungselementes messbar ist, insbesondere wobei der Sensor als optischer Sensor oder Ultraschallsensor ausgebildet ist. Auch die Auslenkung des Bewegungselementes, die über den Sensor zumindest mittelbar erfassbar ist, kann als Rückschluss für den Zustand des Förderbandes und für eine Veränderung der Abstreifsegmente dienen.

Vorzugsweise ist der Sensor in einem Gehäuse der Halterung angeordnet. Das Gehäuse kann den Sensor zumindest teilweise umgeben und schützt bevorzugt den Sensor vor äußeren Einflüssen und/oder mechanischen Beschädigungen. Ferner kann das Gehäuse gewährleisten, dass der Sensor vor Schmutz geschützt wird, der insbesondere beim Betrieb der Förderbandanlage im Bereich der Umlenkwalze anfällt. Demnach kann die Verschleißresistenz des Sensors verbessert werden.

Das Bewegungselement kann bevorzugt einen Vorsprung zum Zusammenwirken mit dem Sensor aufweisen. Vorzugsweise ist ein dem Sensor zugewandter Außenrand des Bewegungselementes, vorzugsweise des Vorsprunges, kreisbogenabschnittsförmig oder zumindest im Wesentlichen kreisbogenabschnittsförmig ausgebildet. Eine solche Ausbildung kann auf vergleichsweise einfache Art bei Drehung des Bewegungselementes eine Detektion entweder der Auslenkung oder der auf den Sensor ausgeübten Kraft des Bewegungselementes gewährleisten.

Vorteilhafterweise weist das System ein Rückstellmittel, vorzugsweise ein Federmittel, auf, das an der Halterung angeordnet ist und bei einer Bewegung des Bewegungselementes eine Rückstellkraft auf das Bewegungselement ausübt. Das Rückstellmittel kann somit gewährleisten, dass bei einer entsprechenden Bewegung des Bewegungselementes dieses zurück in die ursprüngliche Position kehrt. Letztlich kann das Rückstellmittel aber auch dafür vorgesehen sein, dass zunächst die von dem Rückstellmittel aufgebrachte Rückstellkraft überwunden werden muss, damit eine Bewegung des Bewegungselementes eintritt. Dies kann somit zur Initiierung der Bewegung des Bewegungselementes führen und insbesondere gewährleisten, dass nicht jede geringfügige Veränderung der auf das Abstreifende veränderten Anstellkraft detektiert wird, sondern bevorzugt nur ein gewisses Mindestmaß der Veränderung der Abstreifsegmente erfasst wird. Letztlich kann durch das Rückstellmittel eine untere Grenze, die zunächst überwunden werden muss, vorgegeben werden.

Bei einer besonders bevorzugten Ausgestaltung der Erfindung ist vorgesehen, dass das System eine Kommunikationseinrichtung zur Übertragung von vom Sensor erfassten Informationen aufweist. Diese Kommunikationseinrichtung kann beabstandet bzw. außerhalb von der Halterung angeordnet sein. Die Kommunikationseinrichtung kann auch außerhalb von dem Förderband angeordnet sein. Demgemäß kann auch die Kommunikationseinrichtung als externe Kommunikationseinrichtung angesehen werden.

Die Kommunikationseinrichtung kann bei einer weiteren Ausführungsform insbesondere auch Cloud-basiert sein.

Bevorzugt ist jedoch, dass die Kommunikationseinrichtung eine körperliche, in der Nähe der Förderanlage bzw. des Förderbandes befindliche Einrichtung ist, die vom Sensor erfasste Informationen zur Überwachung des Zustandes des Förderbandes auswertet. Letztlich kann die Kommunikationseinrichtung die von dem Sensor erfassten Informationen auswerten und somit den Zustand des Förderbandes überwachen. Bevorzugt kann die Auswertung derart erfolgen, dass ein Schaden am Förderband durch die Kommunikationseinrichtung feststellbar ist. Hierzu können die vom Sensor erfassten Informationen auch mit in der Kommunikationseinrichtung hinterlegten Grenzwerten verglichen werden.

Vorzugsweise ist die Kommunikationseinrichtung drahtgebunden mit dem Sensor verbunden. **In** weiteren Ausführungsformen kann auch vorgesehen sein, dass eine drahtlose Verbindung eine einfache Übertragung der Messsignale von dem Sensor ermöglicht.

Besonders bevorzugt weist das System eine Messeinrichtung zur Erfassung der Geschwindigkeit des Förderbandes, der Laufrichtung des Förderbandes und/oder Position des Förderbandes auf. Die Messeinrichtung kann insbesondere eine Messrolle aufweisen. Die Messrolle kann an dem Förderband, bevorzugt unterhalb des Förderbandes, angeordnet sein. Die Messrolle kann ermöglichen, die Geschwindigkeit des Förderbandes zu erfassen, vorzugsweise indem das bewegte Förderband auch die Messrolle bewegt bzw. mitnimmt, vorzugsweise ein Drehmoment auf die Messrolle überträgt, wobei durch die Drehgeschwindigkeit der Messrolle wiederum die Geschwindigkeit des Förderbandes feststellbar ist.

Darüber hinaus können induktive Sensoren der Messeinrichtung an der Messrolle angeordnet sein. Diese induktiven Sensoren können insbesondere mit einem Indikatormittel zusammenwirken, das an dem Förderband angeordnet sein kann. Das Indikatormittel kann beispielsweise ein an dem Förderband angeordneter Metallstreifen sein. Dieser kann ermöglichen, dass die Position des Förderbandes ermittelbar ist, indem beispielsweise die Position des Indikatormittels mit der Geschwindigkeit des Förderbandes verknüpft wird. Die Laufrichtung des Förderbandes wiederum kann durch die Drehrichtung der Messrolle festgestellt werden.

Bei einer weiteren bevorzugten Ausführungsform ist vorgesehen, dass die Messeinrichtung mit der Kommunikationseinrichtung zur Übertragung von von der Messeinrichtung erfassten Informationen verbunden ist. Vorzugsweise kann so ermöglicht werden, dass die Kommunikationseinrichtung derart ausgebildet ist, dass von der Messeinrichtung und vom Sensor empfangene Informationen derart von der Kommunikationseinrichtung miteinander verknüpft werden bzw. verknüpfbar sind, dass die Position eines Schadens am Förderband detektierbar ist. Eine solche Detektion der Position kann beispielsweise durch Nutzung des Zusammenwirkens zwischen den induktiven Sensoren und dem Indikatormittel ermöglicht werden. Grundsätzlich kann die Position aber auch auf andere Weisen ermittelt werden.

Eine Verknüpfung der Messdaten sowohl von der Messeinrichtung als auch von dem Sensor ermöglicht es somit einer Bedienperson der Förderbandanlage insbesondere, vergleichsweise schnell einen Schaden feststellen zu können, so dass dieser Förderbandschaden auch zeitnah behoben werden kann. Dies reduziert die zur Wartung der Förderbandanlage aufzuwendenden Kosten und auch den hierfür benötigten Aufwand.

Bevorzugt weist das System eine Steuereinrichtung zur Steuerung der Förderbandanlage auf. Die Kommunikationseinrichtung kann derart mit der Steuereinrichtung verbunden sein, dass bei Feststellung eines Schadens am Förderband durch die Kommunikationseinrichtung die Steuereinrichtung, das Förderband und/oder die Förderbandanlage abschaltet und/oder die Abstreifsegmente von dem Förderband freistellt. Somit kann dem Benutzer der Förderbandanlage ermöglicht werden, weitere Schäden an dem Förderband zu verhindern und vergleichsweise schnell einen Eingriff zur Behebung des Schadens am Förderband zu ermöglichen. Die Steuereinrichtung führt somit zu einer erhöhten Sicherheit der gesamten Förderbandanlage.

Bei einer weiteren bevorzugten Ausgestaltung der Erfindung ist vorgesehen, dass an der Tragwelle und vorzugsweise an der Anstelleinrichtung eine manuelle Kupplung angeordnet ist, unter deren Nutzung die Drehlage der Tragwelle und vorzugsweise des Bewegungselementes manuell verstellbar und in der jeweils eingestellten Drehlage fixierbar ist. Insbesondere können durch entsprechende Betätigung der Kupplung die Abstreifsegmente an das Förderband anstellbar oder von dem Förderband freistellbar sein. Die Kupplung ermöglicht es somit für einen Außenstehenden einen Eingriff zur Veränderung der Position der Abstreifsegmente auf einfache Art zu ermöglichen.

Vorzugsweise weist die Anstelleinrichtung ein an der Tragwelle Drehmoment übertragend angekoppeltes Antriebselement eines ortsfest an der Halterung angeordneten elektrischen Antriebsmotors auf. Vorzugsweise ist das Antriebselement drehfest mit dem Bewegungselement verbunden. Der Antriebsmotor kann auch zusätzlich zur Kupplung bereitgestellt werden oder alternativ zu dieser verwendet werden.

Auch eine Anstelleinrichtung ohne Antriebsmotor kann erfindungsgemäß bereitgestellt werden, wobei dann die auf die Abstreifsegmente wirkenden Vorspannkräfte durch die Anstelleinrichtung aufgebracht werden können.

Die Erfindung betrifft ebenfalls ein Verfahren zur Überwachung des Zustands eines Förderbands einer Förderbandanlage. Das Verfahren umfasst zum einen das Bereitstellen eines Systems nach einer der vorgenannten Ausführungsformen. Ferner wird verfahrensgemäß und erfindungsgemäß eine charakteristische Größe des Bewegungselementes erfasst. Die Erfassung dieser charakteristischen Größe des Bewegungselementes gelingt auf die zuvor beschriebene und besonders vorteilhafte Art und Weise.

Daher versteht es sich, dass im Hinblick auf bevorzugte Ausführungsformen und Vorteile des erfindungsgemäßen Verfahrens auf die vorgenannten Vorteile und bevorzugten Ausgestaltungen des Systems verwiesen werden darf, die erfindungsgemäß auch in gleicher Weise für das Verfahren gelten können. Letztlich wird in dem erfindungsgemäßen Verfahren die Überwachung des Zustands des Förderbandes der Förderbandanlage durchgeführt, wobei das erfindungsgemäße System genutzt wird. Bereits im Zusammenhang mit der Beschreibung des Systems ist erläutert worden, wie ein solches Überwachungsverfahren durchgeführt werden kann, so dass somit zur Vermeidung von unnötigen Wiederholungen auf diesbezügliche erneute Ausführungen verzichtet werden darf.

Bei dem erfindungsgemäßen Verfahren wird vorzugsweise die Tragwelle derart bewegt, dass eine Oberfläche der Abstreifsegmente mit dem Förderband in Kontakt ist. Insbesondere bei Erfassung der charakteristischen Größe des Bewegungselementes sind die Abstreifsegmente in Kontakt mit dem Förderband.

Zur Messung der charakteristischen Größe des Bewegungselementes, die wiederum insbesondere einen Rückschluss auf einen möglichen Schaden am Förderband ermöglicht, können unterschiedliche Messverfahren oder -prinzipien vorgesehen sein. Bei einer ersten bevorzugten Ausführungsform übt bei einer Bewegung des Bewegungselements das Bewegungselement eine Kraft auf den Sensor aus, insbesondere drückt das Bewegungselement gegen den Sensor drückt oder zieht den Sensor. Diese Kraft bzw. eine zu dieser Kraft korrelierende Größe kann insbesondere die vom Sensor zu erfassende charakteristische Größe sein.

Bei einer weiteren bevorzugten Ausführungsform wird eine vom Bewegungselement auf den Sensor ausgeübte Kraft, eine Veränderung der Position oder Winkellage des Bewegungselements oder eine Beschleunigung des Bewegungselements erfasst.

Alternativ oder zusätzlich kann eine Auslenkung des Bewegungselements gemessen werden.

Die vorgenannten Messverfahren ermöglichen insbesondere, dass durch Erfassung der charakteristischen Größe des Bewegungselementes eine Überwachung des Zustandes des Förderbandes realisiert werden kann.

Bei einer besonders bevorzugten Ausgestaltung des Verfahrens ist vorgesehen, dass die Kommunikationseinrichtung die von dem Sensor erfassten Informationen zur Überwachung des Zustands des Fördergurtes auswertet. Die Auswertung erfolgt insbesondere derart, dass ein Schaden am Fördergurt durch die Kommunikationseinrichtung feststellbar ist. Somit kann das erfindungsgemäße Verfahren insbesondere eine Schadensdetektion am Förderband gewährleisten.

Bevorzugt ist vorgesehen, dass die Messeinrichtung die Geschwindigkeit des Förderbandes, die Laufrichtung des Förderbandes und/oder die Position des Förderbandes zumindest mittelbar erfasst. Die Messeinrichtung kann hierfür sich der Messrolle und/oder der induktiven Sensoren sowie des Indikatormittels bedienen, wie dies eingangs bereits erläutert worden ist.

Ferner betrifft die vorliegende Erfindung eine Förderbandanlage mit einem Förderband und einem System nach einer der vorgenannten Ausführungsformen.

Auch im Hinblick auf die erfindungsgemäße Förderbandanlage versteht es sich, dass explizit zur Vermeidung von unnötigen Ausführungen auf die Ausführungen zum Verfahren und/oder zum System verwiesen werden darf, die in gleicher Weise auch für die vorliegende Erfindung der Förderbandanlage gelten, ohne dass dies einer weiteren expliziten Erwähnung bedarf.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst.

Es zeigt:
- Fig. 1: eine schematische perspektivische Darstellung einer erfindungsgemäßen Förderbandanlage,
- Fig. 2: eine schematische Seitenansicht von Teilen einer weiteren Ausführungsform einer erfindungsgemäßen Förderbandanlage,
- Fig. 3: eine schematische Seitenansicht von Teilen einer weiteren Ausführungsform einer erfindungsgemäßen Förderbandanlage,
- Fig. 4: eine schematische Seitenansicht von Teilen einer weiteren Ausführungsform einer erfindungsgemäßen Förderbandanlage,
- Fig. 5: eine schematische Seitenansicht von Teilen einer weiteren Ausführungsform einer erfindungsgemäßen Förderbandanlage,
- Fig. 6: eine schematische perspektivische Explosionsansicht von Teilen eines erfindungsgemäßen Systems,
- Fig. 7: eine schematische perspektivische Ansicht von Teilen einer weiteren Ausführungsform eines erfindungsgemäßen Systems,
- Fig. 8: eine schematische perspektivische Ansicht von Teilen einer weiteren Ausführungsform eines erfindungsgemäßen Systems,
- Fig. 9: eine schematische perspektivische Ansicht von Teilen einer weiteren Ausführungsform eines erfindungsgemäßen Systems,
- Fig. 10: eine schematische Darstellung des Zusammenwirkens von bestimmten Komponenten einer weiteren Ausführungsform eines erfindungsgemäßen Systems,
- Fig. 11: eine schematische Darstellung eines erfindungsgemäßen Verfahrens,
- Fig. 12: eine schematische Unteransicht auf ein erfindungsgemäßes Förderband und
- Fig. 13: eine schematische perspektivische Darstellung einer erfindungsgemäßen Messeinrichtung.

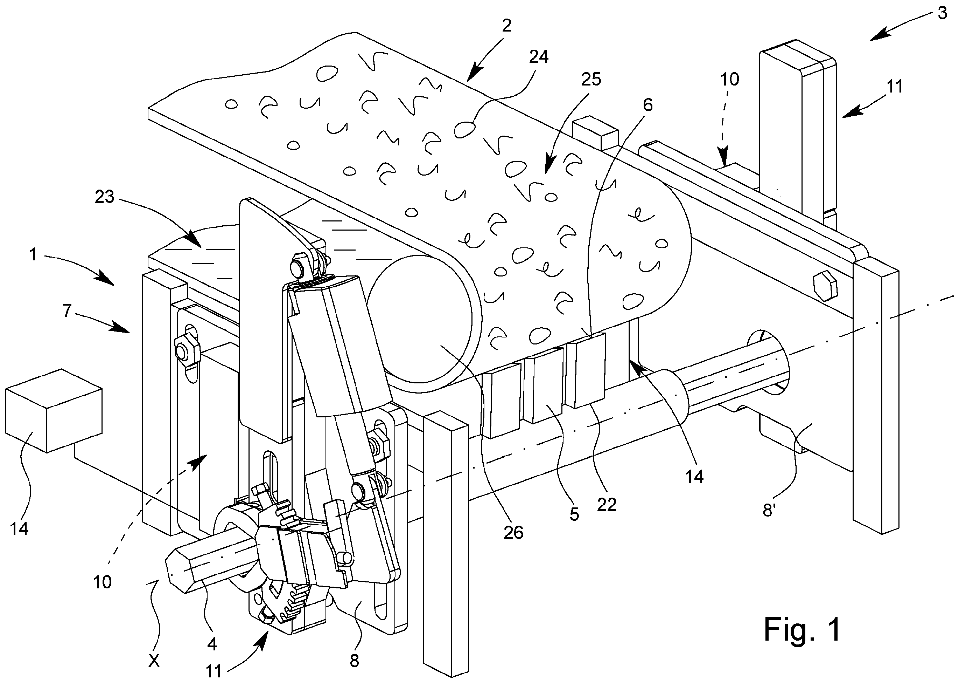

Fig. 1 zeigt schematisch eine Förderbandanlage 3 mit einem Förderband 2, in der eine erste Ausführungsform eines erfindungsgemäßen Systems 1 zur Überwachung des Zustands des Förderbandes 2 eingesetzt ist.

Fig. 1 zeigt - in einer schematischen Darstellung - das in Förderrichtung vordere Ende der Förderbandanlage 3 für Fördergut 24. Das Fördergut 24 kann auch als Schüttgut bezeichnet werden. Das Förderband 2 weist einen Förderbandabschnitt 25 und einen darunter liegenden Rücklaufabschnitt 23 (Untertrum) auf. Das Förderband 2 ist endlos umlaufend in der Förderbandanlage 3 angeordnet. Das Förderband 2 läuft im Übergangsbereich vom Förderbandabschnitt 25 zum Rücklaufabschnitt 23 um eine Umlenkwalze 26.

Mit dem Förderband 2 ist ein nicht näher dargestellter Antrieb verbunden, der zum Antrieb des Förderbandes 2 vorgesehen ist.

Auf dem Förderband 2 - und zwar oben auf dessen Förderbandabschnitt 25 - ist in Fig. 1 darauf befindliches Fördergut 24 schematisch angedeutet. Beispielsweise kann als Fördergut 24 Schüttgut wie Sand, Kies, Kohle, Erz oder dergleichen transportiert werden.

Unterhalb des Förderbandes 2 und nicht weit von der Umlenkwalze 26 sieht man eine Tragwelle 4 der Förderbandanlage 3 und des Systems 1. Die Tragwelle 4 kann im Querschnitt eine Sechskantform aufweisen. An bzw. auf der Tragwelle 4 sind beispielhaft drei Abstreifsegmente 5 angeordnet. Die Abstreifsegmente 5 können letztlich auf unterschiedliche Weisen an die Tragwelle 4 angeordnet werden. Mehrere Abstreifsegmente 5 sind an der Tragwelle 4 angeordnet - und zwar Drehmoment übertragend mit der Tragwelle 4 verbunden. Insbesondere ist jedes Abtreifsegment 5 formschlüssig Drehmoment übertragend mit der Tragwelle 4 verbunden. Jedes Abstreifsegment 5 kann einen gegenüber von einem Halteende 22 befindliches Abstreifende 6 aufweisen. Fig. 1 zeigt einen sogenannten Primärabstreifer 27, bei dem das Abstreifende 6 jedes Abstreifsegmentes 5 am Untertrum bzw. im Bereich des Rücklaufabschnittes 23 zumindest im Wesentlichen unterhalb der Umlenkwalze 26 am Förderband 2 angestellt ist.

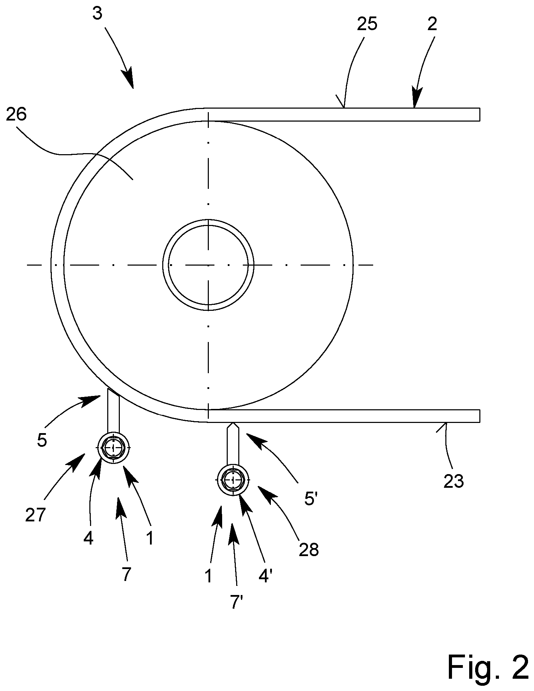

Fig. 2 zeigt neben einem Primärabstreifer 27 einen sogenannten Sekundärabstreifer 28.

Fig. 1 zeigt ferner eine Halterung 8, die ortsfest angeordnet ist und in der die Tragwelle 4 in dem dargestellten Ausführungsbeispiel drehbar gelagert ist. Die Tragwelle 4 kann über ein Haltelager 9 an der Halterung 8 drehbar gelagert sein. Die drehbare Lagerung der Tragwelle ist um die Längsachse X der Tragwelle 4 vorgesehen, wie dies aus der Fig. 1 schematisch hervorgeht.

Das System 1 umfasst ferner ein Bewegungselement 11. Das Bewegungselement 11 ist an der Halterung 8 angeordnet und mit der Tragwelle 4 bewegungsmäßig gekoppelt. Insbesondere ist das Bewegungselement 11 gemäß der in Fig. 1 dargestellten und bevorzugten Ausführungsform drehfest mit der Tragwelle 4 verbunden.

Alternativ oder zusätzlich kann vorgesehen sein, dass das Bewegungselement 11 derart mit der Tragwelle 4 verbunden ist, dass eine Belastung der Tragwelle 4 eine translatorische Bewegung des Bewegungselementes 11 bewirkt.

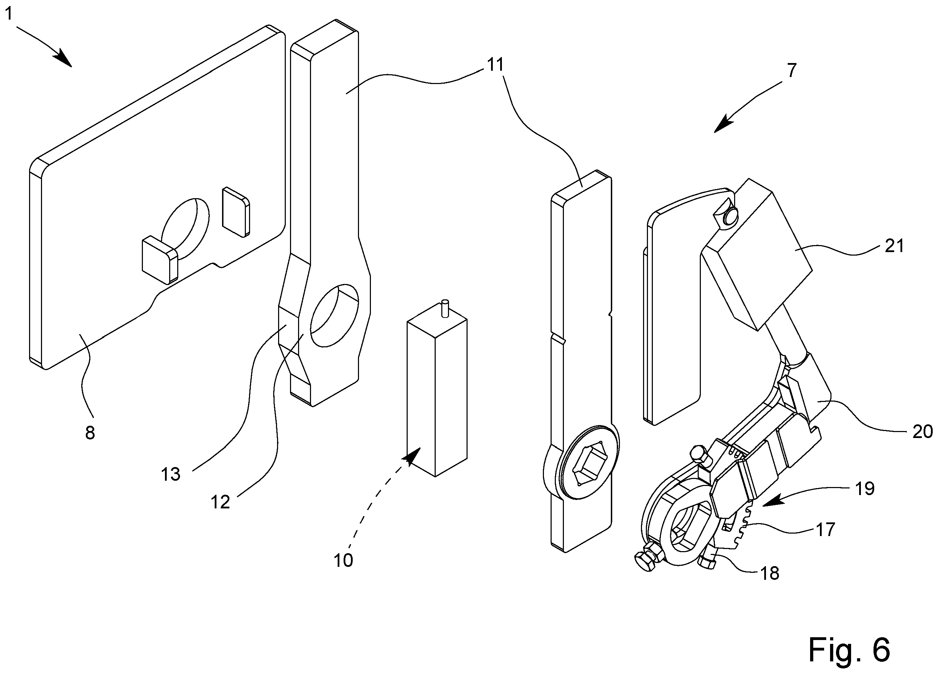

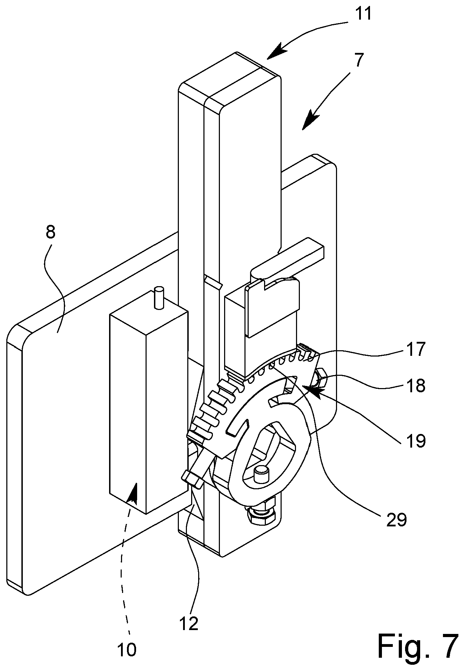

Zudem umfasst das System 1 einen Sensor 10, wie dieser schematisch in Fig. 1, aber auch in der Fig. 6 sowie in den Fig. 7 bis 9 dargestellt ist. Der Sensor 10 ist zur Überwachung des Zustands des Förderbandes 2 ausgebildet.

Gemäß dem in Fig. 1 und in den weiteren dargestellten und bevorzugten Ausführungsbeispielen ist vorgesehen, dass die Abstreifsegmente 5, die Tragwelle 4, die Halterung 8 und das Bewegungselement 11 derart zusammenwirken, dass eine auf die Abstreifsegmente 5 wirkende Kraft auf das Bewegungselement 11 übertragen wird, wobei der Sensor 10 derart angeordnet und ausgebildet ist, dass der Sensor 10 eine charakteristische, insbesondere physikalische, Größe des Bewegungselementes 11 erfasst.

Diese vom Sensor 10 erfasste Größe kann dann einen Rückschluss auf den Zustand des Förderbandes 2 ermöglichen und diesen demnach überwachen.

Beispielsweise kann der Sensor 10 derart ausgebildet sein, dass eine Veränderung der Position des Bewegungselementes 11 erkannt wird, was wiederum einen Rückschluss auf den Zustand des Förderbandes 2 ermöglicht. Beispielsweise ist es so, dass sich eine von dem Förderband 2 auf die Abstreifsegmente 5 bzw. das Abstreifende 6 eines Abstreifsegmentes 5 ausgeübte Gurtmitnahmekraft ändert. Insbesondere ändert sich die auf das Abstreifende 6 ausgeübte Gurtmitnahmekraft bei einem Gurtschaden am Förderband 2.

Bei einem Gurtschaden kann ein Beabstanden der Abstreifsegmente 5 vom Förderband 2 hervorgerufen werden, was wiederum zu einer Bewegung der Tragwelle 4 führt, die wiederum eine Bewegung des Bewegungselementes 11 nach sich zieht. Demnach kann über das Zusammenwirken bzw. die Kopplung zwischen den Abstreifsegmenten 5 und dem Bewegungselement 11 und durch Erfassung der charakteristischen Größe des Bewegungselementes 11 ein Rückschluss auf die Position des Bewegungselementes 11 bzw. auf die von dem Förderband 2 auf die Abstreifsegmente 5 ausgeübte Kraft ermöglicht werden.

Alternativ oder zusätzlich kann auch vorgesehen sein, dass die vom Sensor 10 erfasste charakteristische Größe einen Rückschluss auf die zur Anstellung der Abstreifsegmente 5 an das Förderband 2 aufzuwendende Anstellkraft, die beispielsweise über eine Anstelleinrichtung 7 aufgebracht werden kann, ermöglichen kann.

**In** dem in Fig. 1 dargestellten und bevorzugten Ausführungsbeispiel ist vorgesehen, dass das System 1 ferner eine Anstelleinrichtung 7 umfasst. Mittels der Anstelleinrichtung 7 kann die Tragwelle 4 derart bewegbar sein, dass eine Oberfläche der Abstreifsegmente 5, insbesondere das Abstreifende 6 eines Abstreifsegmentes 5, mit dem Förderband 2 in Kontakt bringbar ist, wobei die Anstelleinrichtung 7 an der Halterung 10 angeordnet und Drehmoment übertragend mit der Tragwelle 4 verbunden ist. Das Bewegungselement 11 kann mit der Anstelleinrichtung 7 bewegungsmäßig gekoppelt oder Teil der Anstelleinrichtung 7 sein.

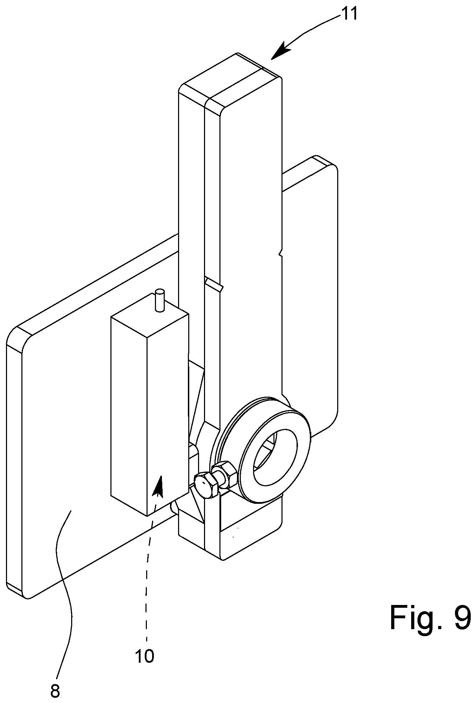

Die Anstelleinrichtung 7 kann motorbetrieben sein, wie dies in Fig. 1 dargestellt ist, muss es jedoch nicht. **In** diesem Zusammenhang zeigen die Fig. 7 und 9 eine Ausführungsform der Anstelleinrichtung 7 bzw. die Fig. 9 von Teilen der Anstelleinrichtung 7, bei der kein Antriebsmotor 21 vorhanden ist. Dann kann beispielsweise die Anstellung über eine manuelle Kupplung 19 erfolgen, wie dies später noch erläutert wird. Auch kann die Anstelleinrichtung 7 dann insbesondere händisch betrieben werden und zum Festhalten der Abstreifsegmente 5 Federanordnungen oder ähnliches umfassen.

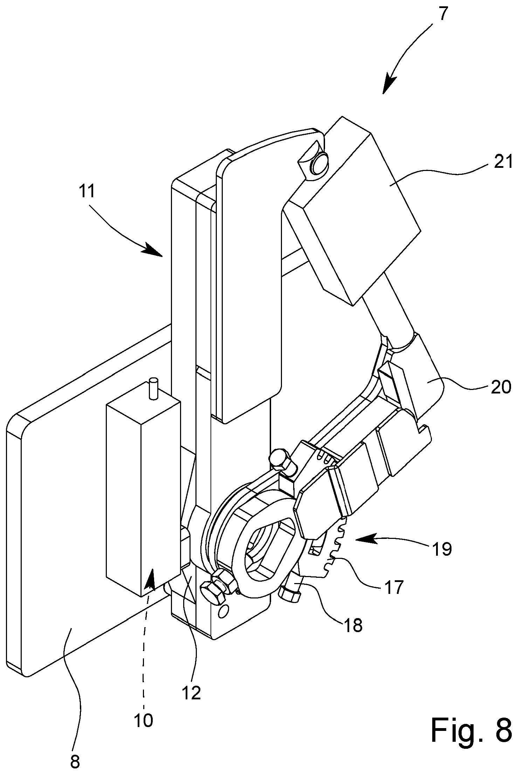

**In** der Fig. 6 ist in der Explosionsansicht schematisch das Bewegungselement 11 dargestellt. Das Bewegungselement 11 kann dabei mehrteilig oder einteilig ausgebildet sein. **In** Fig. 6 ist dargestellt, dass in der dargestellten und bevorzugten Ausführungsform eine mehrteilige Ausbildung des Bewegungselementes 11 vorgesehen ist, wobei die Bestandteile des Bewegungselementes 11 im eingebauten Zustand drehfest miteinander verbunden sein können, wie dies die Fig. 8 schematisch zeigt. Gemäß der in Fig. 6 dargestellten Ausführungsform ist das Bewegungselement 11 auch Bestandteil der Anstelleinrichtung 7.

Bei der in Fig. 1 dargestellten und bevorzugten Ausführungsform ist vorgesehen, dass der Sensor 10 und das Bewegungselement 11 derart angeordnet und ausgebildet sind, dass bei einer Bewegung des Bewegungselementes 11 das Bewegungselement 11 eine Kraft auf den Sensor 10 ausübt, insbesondere gegen den Sensor 10 drückt.

Bevorzugt kann der Sensor 10 derart angeordnet und ausgebildet sein, dass der Sensor 10 eine vom Bewegungselement 11 auf den Sensor 10 ausgeübte Kraft erfassen kann. Ein Erfassen der Kraft kann unmittelbar oder mittelbar erfolgen. Insbesondere können auch Größen ermittelt werden, die zu der von dem Bewegungselement 11 auf den Sensor 10 ausgeübten Kraft korrelieren.

Insbesondere ist der Sensor 10 derart angeordnet und ausgebildet, dass der Sensor 10 eine Veränderung der Position oder der Winkellage des Bewegungselementes 11 oder eine Beschleunigung des Bewegungselementes 11 erfassen kann. Dies ist in nicht näher dargestellten Ausführungsformen vorgesehen.

Der Sensor 10 kann in dem in Fig. 1 dargestellten und bevorzugten Ausführungsbeispiel als Dehnungsmessstreifen ausgebildet sein. **In** weiteren Ausführungsformen kann der Sensor 10 auch einen Dehnungsmessstreifen aufweisen oder als Kraftsensor, piezoelektrischer Sensor, Potentiometer, Winkelsensor, Beschleunigungssensor oder magnetischer Näherungssensor ausgebildet sein.

In einer weiteren, nicht näher dargestellten Ausführungsform ist vorgesehen, dass eine Auslenkung des Bewegungselementes 11 messbar ist, insbesondere wenn der Sensor 10 als optischer Sensor oder Ultraschallsensor ausgebildet ist.

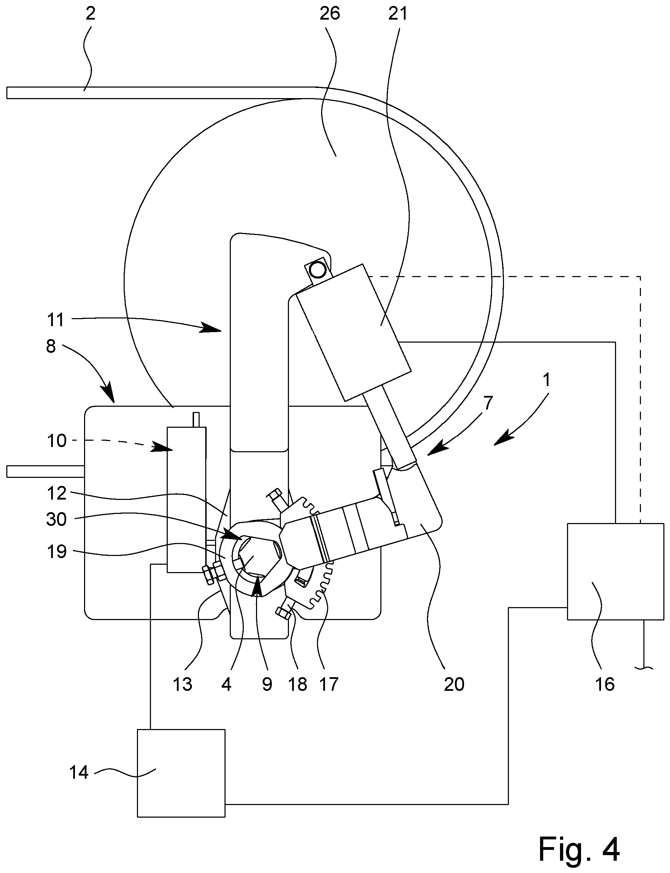

In dem in Fig. 4 dargestellten und bevorzugten Ausführungsbeispiel ist der Sensor 10 ortsfest an der Halterung 8 angeordnet.

In Fig. 2 ist dargestellt, dass letztlich zwei Anstelleinrichtungen 7 und 7' sowohl für den Primärabstreifer 27 als auch für den Sekundärabstreifer 28 vorgesehen ist. **In** diesem Zusammenhang versteht es sich, dass die vorgenannten Ausführungen zur Anstelleinrichtung 7 des Primärabstreifers 27, wie er schematisch in der Fig. 1 dargestellt ist, in gleicher Weise auch für die Anstelleinrichtung 7' des Sekundärabstreifers 28 gelten können, ohne dass dies einer weiteren Erläuterung bedarf. Letztlich kann das System 1 sowohl an dem Primärabstreifer 27 als auch an dem Sekundärabstreifer 28 vorgesehen sein und insbesondere gemäß der zuvor und nachfolgend beschriebenen Ausführungsformen ausgebildet sein.

Auch das System 1 des Sekundärabstreifers 28 kann dann eine Tragwelle 4' sowie wenigstens ein Abstreifelement 5' aufweisen, das an der Tragwelle 4' angeordnet ist.

Aus Fig. 6 geht schematisch hervor, dass gemäß einem dargestellten und bevorzugten Ausführungsbeispiel das Bewegungselement 11 einen Vorsprung 12 zum Zusammenwirken mit dem Sensor 10 aufweist, was näher insbesondere in der Fig. 8 dargestellt ist. Insbesondere ist ein dem Sensor 10 zugewandter Außenrand 13 des Bewegungselementes 11 bzw. des Vorsprunges 12 zumindest im Wesentlichen kreisbogenabschnittsförmig und/oder gebogen und/oder abgewinkelt ausgebildet. Eine solcher Ausbildung des Außenrandes 13 ermöglicht es, dass auf vergleichsweise einfache Art eine Bewegung bzw. eine Kraft des Bewegungselements 11 durch den Sensor 10 detektiert werden kann, was einen Rückschluss auf den Zustand des Förderbandes 2 ermöglicht. So stellt der Vorsprung 12 sicher, dass nicht das gesamte Bewegungselement 11 an dem Sensor 10 anstoßen bzw. anschlagen muss, sondern insbesondere ein vorgegebener Bereich, der entsprechend der Art des Sensors 10 ausgebildet sein kann.

Dabei kann der Vorsprung 12 derart ausgebildet sein, dass beispielsweise vor Zusammenwirken mit dem Sensor 10 eine Mindestkraft oder ein Mindestabstand überwunden werden muss, der insbesondere anhand von beim Zustandekommen der Erfindung durchgeführten Versuchen festgestellt worden ist. Ist ein solcher Abstand oder eine solche Kraft überwunden, so ist von einem Schaden am Förderband 2 auszugehen. Dann soll auch der Sensor 10 eine Bewegung bzw. eine Kraft des Bewegungselementes 11 detektieren, so dass ein Gurtschaden rechtzeitig erkannt werden kann.

Nicht näher dargestellt ist, dass das in Fig. 1 dargestellte und bevorzugte System 1 ein Rückstellmittel aufweist, das an der Halterung 8 angeordnet ist und bei einer Bewegung des Bewegungselementes 11 eine Rückstellkraft auf das Bewegungselement 11 ausübt. Ein solches Rückstellmittel kann also somit nach erfolgtem Ausschlag des Bewegungselementes 11 dafür sorgen, dass ein erneuter Gurtschaden und eine erneute Gurtschadendetektion über das Bewegungsmittel 11 und durch das Zusammenwirken zwischen dem Bewegungsmittel 11 und dem Sensor 10 sichergestellt werden kann.

In dem in Fig. 1 dargestellten und bevorzugten Ausführungsbeispiel ist eine Kommunikationseinrichtung 14 vorgesehen. Die Kommunikationseinrichtung 14 dient zur Übertragung von vom Sensor 10 erfassten Informationen. Insbesondere kann der Sensor 10 drahtgebunden mit der Kommunikationseinrichtung 14 verbunden sein. Die Kommunikationseinrichtung 14 kann extern von der Halterung 8 angeordnet sein, wie dies schematisch in der Fig. 1 dargestellt ist. Die Kommunikationseinrichtung 14 kann vorzugsweise derart ausgebildet sein, dass es die vom Sensor 10 erfassten Informationen zur Überwachung des Zustands des Förderbandes 2 auswertet, bevorzugt derart, dass ein Schaden am Förderband 2 durch die Kommunikationseinrichtung 14 feststellbar ist.

In weiteren und nicht näher dargestellten Ausführungsformen kann auch vorgesehen sein, dass die Kommunikationseinrichtung 14 zu einem externen Server oder einer externen Cloud verbunden ist, in dem bzw. der die entsprechende Auswertung der vom Sensor 10 erfassten Messdaten zur Gurtschadendetektion durchgeführt werden kann. Dann kann die Kommunikationseinrichtung 14 entsprechende Übertragungsmittel zur Übertragung an den Server bzw. die Cloud aufweisen, so dass bevorzugt eine drahtlose Übertragung gewährleistet werden kann.

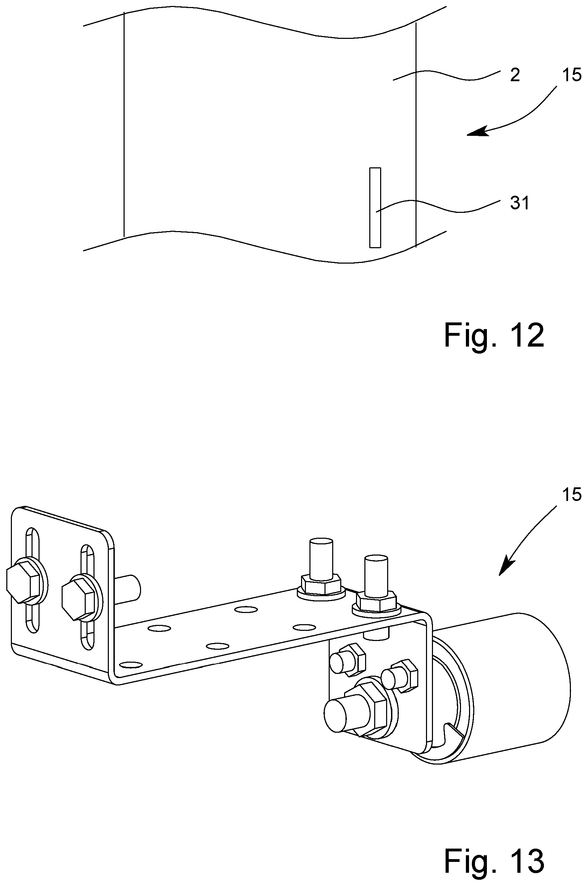

In den Fig. 12 und 13 ist dargestellt, dass das System 1 eine Messeinrichtung 15 umfassen kann. So zeigt die Fig. 13 eine Messrolle, die Bestandteil der Messeinrichtung 15 ist und unterhalb des Förderbandes 2 beispielsweise am Rücklaufabschnitt oder an der Unterseite des Förderbandabschnitts 25 angeordnet sein kann. Letztlich kann die Messeinrichtung zur Erfassung der Geschwindigkeit des Förderbandes 2, der Laufrichtung des Förderbandes 2 und/oder Position des Förderbandes 2 vorgesehen sein. Durch die Messrolle kann somit durch Drehung der Rolle eine entsprechende Ermittlung der vorgenannten Größen erfolgen.

Im Hinblick auf die Position des Förderbandes 2 kann ferner vorgesehen sein, dass die Messeinrichtung 15 ein Indikatormittel 31 aufweist, das am Förderband 2 bzw. am Fördergurt 24 angeordnet ist, wie dies die Fig. 12 zeigt. Dieses Indikatormittel 31 kann dann mit Sensoren der Messeinrichtung 15 zusammenwirken und somit in einem bestimmten Abschnitt des Förderbandes 2 angeordnet sein. Sofern die Geschwindigkeit des Förderbandes 2 sowie die Richtung der Drehung bekannt ist, ermöglicht eine diesbezügliche Ermittlung den Rückschluss darauf, welche Position des Förderbandes 2 beispielsweise gerade an die Abstreifsegmente 5 angreift bzw. in welchem Bereich die Abstreifsegmente 5 des Förderbandes 2 gerade angeordnet sind.

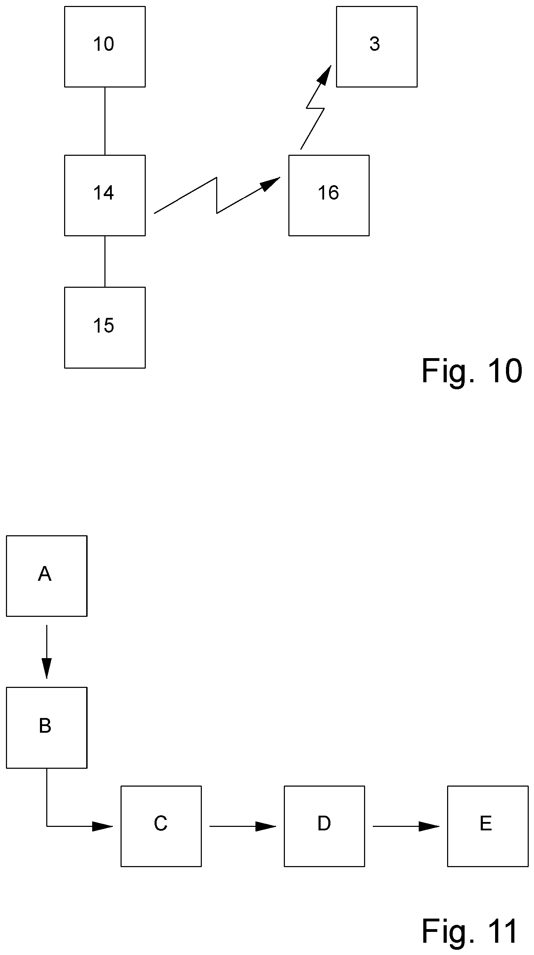

Die Messeinrichtung 15 kann mit der Kommunikationseinrichtung 14 zur Übertragung von von der Messeinrichtung 15 erfassten Informationen ausgebildet sein, wie dies schematisch die Fig. 10 zeigt. Vorzugweise ist die Kommunikationseinrichtung 14 derart ausgebildet, dass von der Messeinrichtung 15 und vom Sensor empfangene Informationen derart in der Kommunikationseinrichtung 14 miteinander verknüpft werden, dass die Position eines Schadens am Förderband 2 detektierbar ist. Dies wird dadurch ermöglicht, dass die von dem Sensor 10 erfassten Informationen wiederum feststellen können, wann ein Schaden am Förderband 2 gegeben ist. Die von der Messeinrichtung 15 erfassten Informationen ermöglichen es dann festzustellen, in welchem Bereich des Förderbandes 2 dieser Schaden vorliegt. Dies kann beispielsweise durch die Ermittlung der Geschwindigkeit des Förderbandes 2, der Laufrichtung sowie der Position des Förderbandes 2 erfolgen.

Insbesondere kann die Messeinrichtung 15 induktive Sensoren aufweisen, die bevorzugt an der Messrolle angeordnet sind. Diese induktiven Sensoren können insbesondere mit den Indikatormittel 31, das vorzugsweise ein Metallstreifen ist, zusammenwirken und somit die Position dieses Indikatormittels 31 am Förderband 2 feststellen.

In Fig. 10 ist schematisch dargestellt, dass eine Steuereinrichtung 16 vorgesehen ist. Die Steuereinrichtung 16 kann Bestandteil des Systems 1 sein. Die Steuereinrichtung 16 kann zur Steuerung der Förderbandanlage 2 ausgebildet sein, wobei die Kommunikationseinrichtung 14 derart mit der Steuerungseinrichtung 16 verbunden ist, dass bei Feststellung eines Schadens am Förderband 2, was durch die Kommunikationseinrichtung 14 erfolgen kann, die Steuereinrichtung 16 das Förderband 2 und/oder die Förderbandanlage 3 abschaltet und/oder dass die Abstreifsegmente 5 an dem Förderband 2 freigestellt werden.

Ferner kann eine manuelle Kupplung 19 vorgesehen sein, wie dies unter anderem in Fig. 4 dargestellt ist. Unter Nutzung der manuellen Kupplung 19 kann die Drehlage der Tragwelle 4 und insbesondere nach dem dargestellten und bevorzugten Ausführungsbeispiel auch des Bewegungselementes 11 manuell verstellbar sein. **In** der jeweils eingestellten Position ist die Dreh-Relativlage dann mittels der Kupplung 19 insbesondere fixierbar. Durch Betätigung der Kupplung 19 sind die Abstreifsegmente 5 in der in Fig. 4 dargestellten und bevorzugten Ausführungsform an das Förderband 2 anstellbar und/oder wieder vom Förderband 2 freistellbar.

Die Kupplung 19 wird ferner auch in den Fig. 6 bis 8 näher dargestellt.

Fig. 1 zeigt ferner einen Antrieb für die Tragwelle 4. Vorgesehen ist mindestens ein an der Tragwelle 4, und zwar vorzugsweise an einem Ende der Tragwelle 4 Drehmoment übertragend angekoppeltes Antriebselement 20 eines Antriebsmotors 21. Nicht näher dargestellt ist, dass auch eine Steuerung für den Antriebsmotor 21 vorgesehen sein kann. Typischerweise kann eine solche Steuerung eine elektronische Steuerung, insbesondere mit einer entsprechenden Steuerungssoftware sein.

Durch die entsprechende Ansteuerung des Antriebsmotors 21 können die Abstreifsegmente 5 mit ihrem Abstreifende 6 an das Förderband 2 anstellbar oder von dem Förderband 2 freistellbar sein - also von dem Förderband 2 entfernbar sein.

Der Antriebsmotor 21 kann ortsfest oder bewegbar an der Halterung 8 angeordnet sein. In dem in Fig. 1 dargestellten Ausführungsbeispiel ist vorgesehen, dass der Antriebsmotor 21 nicht unmittelbar an der Halterung 8 angeordnet ist, sondern letztlich sich gegenüber der Halterung 8 verschieben kann, jedoch an dieser zumindest mittelbar gelagert ist. Das Antriebselement des Antriebsmotors 21 ist mit dem Antriebselement 20 insbesondere in passender Weise gekoppelt.

Der Antriebsmotor 21 kann eine beliebige Ausgestaltung haben, er kann beispielsweise ein hydraulischer oder pneumatischer Antriebsmotor sein. Bevorzugt ist ein elektrischer Antriebsmotor 21, und vorzugsweise ein elektrischer Linearantriebsmotor 21.

Grundsätzlich ist es auch denkbar, die vorliegende Erfindung ohne einen Antriebsmotor 21 zu realisieren, wobei dann die Anstellung der Abstreifsegmente 5 an das Förderband 2 auf anderem Wege erfolgen kann, beispielsweise händisch.

Im dargestellten und insoweit bevorzugten Ausführungsbeispiel ist vorgesehen, dass die manuelle Kupplung 19 mit der Tragwelle 4 drehfest und mit dem Antriebselement 20 manuell verstellbar und fixierbar verbunden ist. Unter Nutzung der Kupplung 19 ist eine Dreh-Relativlage der Tragwelle 4 und des Antriebselementes 20 des Antriebsmotors 21 zueinander manuell verstellbar. Für die drehfeste Verbindung der manuellen Kupplung 19 mit der Tragwelle 4 ist in Fig. 4 dargestellt, dass eine Mehrkantausnehmung 30 sowie die manuelle Kupplung 19 und darin eine Fixierschraube vorgesehen sind. Die Fixierschraube erlaubt es dabei, Tragwellen 4 unterschiedlicher Größe mit ein und derselben manuellen Kupplung 19 auszurüsten.

Die manuelle verstellbare und fixierbare Verbindung der manuellen Kupplung 19 mit dem Antriebselement 20 ergibt sich im oberen Bereich etwas oberhalb der Tragwelle 4. Dazu ist hier nach bevorzugter Lehre vorgesehen, dass das Verbinden der Kupplung 19 mit dem Antriebselement 20 eine in Stufen einstellbare Rasterung 17 und eine stufenlose Feineinstellung 18 aufweist. Man sieht den teilkreisförmigen Zahnbogen der Rasterung 17 und oberhalb des Zahnbogens der Rasterung 17 einen von oben in die Rasterung 17 an der entsprechenden Stelle eingreifenden Rastbolzen 29, der am Antriebselement 20 festgelegt sein kann.

Der Rastbolzen 29 kann letztlich in der Rasterung 17 sitzen, wie dies die Fig. 7 zeigt. Dadurch ist die Relativlage der manuellen Kupplung 19 gegenüber dem Antriebselement 20 fixiert.

In den weiteren Figuren ist der Rastbolzen 29 nicht zu sehen, da dieser vom Antriebselement 20 überdeckt ist.

Die manuelle Kupplung 19 ist hier gemäß bevorzugter Lehre allein von Hand, also ohne Werkzeug, betätigbar. Dazu kann ein Zuggriff vorgesehen sein, mit dem man den Rastbolzen 29 nach oben ziehen kann.

Zieht man den Rastbolzen 29 mit dem Zuggriff nach oben, so kommt er außer Eingriff mit der Rasterung 17. Dann kann das Antriebselement 20 verschwenkt werden. Lässt man den Zuggriff anschließend wieder los, so wird der Rastbolzen 29 gemäß der bevorzugten Ausführungsform mittels Federkraft in die Rasterung 17 zurückgedrückt.

Sitzt der Rastbolzen 29 bereits in der Rasterung 17, so ist weiterhin noch die Feineinstellung 18 möglich, mittels der beiden links und rechts sitzenden Einstellschrauben, die eine entsprechende Veränderung ermöglichen. Will man beispielsweise das Antriebselement 20 gegenüber der Tragwelle 4 nach links schwenken, so schraubt man die linke Schraube der Feineinstellung 18 ein und die rechte Schraube heraus, will man nach rechts schwenken, so macht man das umgekehrt.

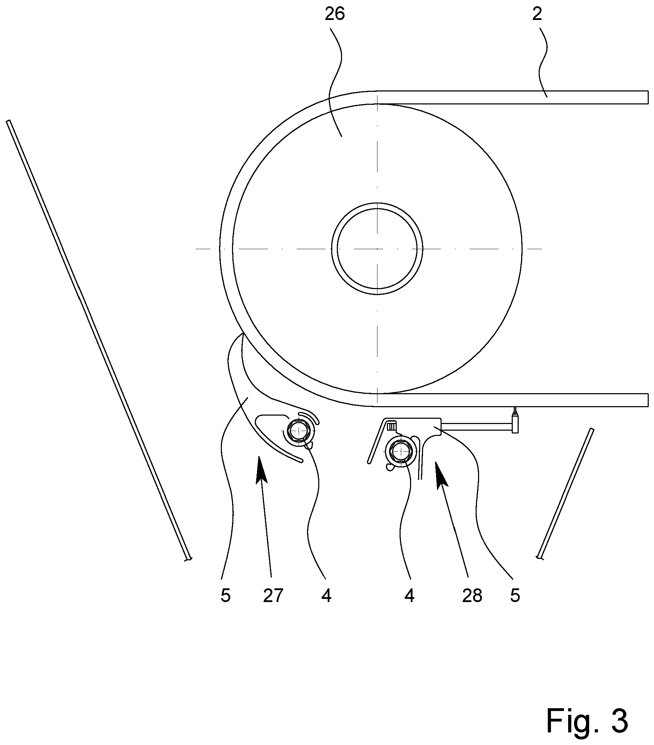

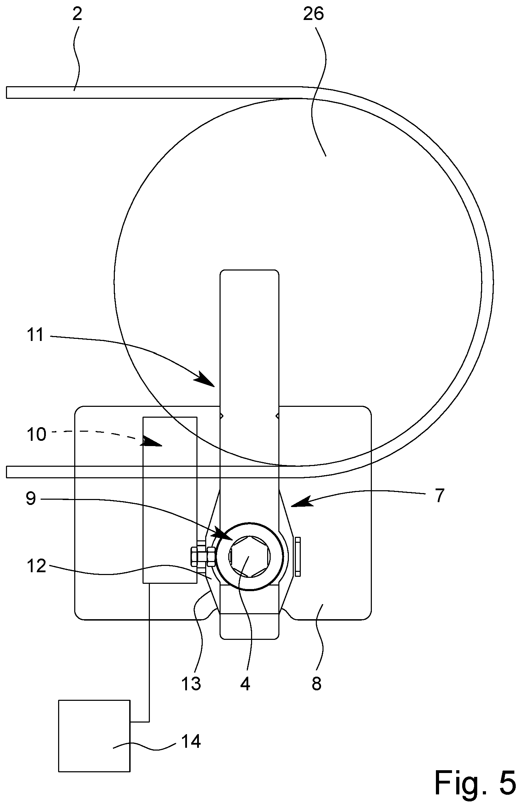

In Fig. 11 ist ein erfindungsgemäßes Verfahren dargestellt. Verfahrensgemäß ist vorgesehen, dass der Zustand eines Förderbandes 2 einer Förderbandanlage 3 überwacht werden kann. Hierzu ist gemäß dem erfindungsgemäßen Verfahren vorgesehen, dass zunächst in einem ersten Schritt A ein System 1 nach einem der vorgenannten Ausführungsformen, wie sie zuvor im Zusammenhang mit den Fig. 1 bis 10 sowie Fig. 12 bis 13 beschrieben worden sind, bereitgestellt wird.

Im Verfahrensschritt B kann dann vorgesehen sein, dass eine charakteristische Größe des Bewegungselementes 11 erfasst wird, wie dies zuvor bereits diskutiert worden ist.

In diesem Zusammenhang kann in einer ersten Ausführungsform vorgesehen sein, dass bei einer Bewegung des Bewegungselements 11 das Bewegungselement 11 eine Kraft auf den Sensor 10 ausübt, insbesondere gegen den Sensor 10 drückt oder den Sensor 10 zieht. Diese Kraft ist durch den Sensor 10 insbesondere zumindest mittelbar detektierbar.

Bei einer weiteren insbesondere alternativen Ausführungsform des Verfahrensschrittes B kann eine vom Bewegungselement 11 auf den Sensor 10 ausgeübte Kraft oder eine Veränderung der Position oder Winkellage des Bewegungselements 11 oder eine Beschleunigung des Bewegungselements 11 erfasst werden.

Alternativ oder zusätzlich kann eine Auslenkung des Bewegungselements 11 gemessen werden.

In dem Schritt C kann ferner von der Messeinrichtung 15 die Geschwindigkeit des Förderbandes 2, die Laufrichtung des Förderbandes 2 oder die Position des Förderbandes 2, insbesondere über das Indikatormittel 31 und die Messrolle, zumindest mittelbar erfasst werden. Die diesbezüglichen Informationen können bevorzugt an die Kommunikationseinrichtung 14 übertragen werden.

Im Schritt D ist insbesondere vorgesehen, dass die Kommunikationseinrichtung 14 die von dem Sensor 10 erfassten Informationen zur Überwachung des Zustands des Förderbandes 2 ausweitet, insbesondere derart, dass ein Schaden am Fördergurt 24 bzw. Förderband 2 durch die Kommunikationseinrichtung 14 feststellbar ist.

Bei der Auswertung der Messdaten im Schritt D kann auch vorgesehen sein, dass die Kommunikationseinrichtung 14 die Informationen vom Sensor 10 mit den übertragenen Messdaten der Messeinrichtung 15 verknüpft, so dass insbesondere einem detektierten Gurtschaden auch eine Position am Förderband 2 zugeordnet werden kann.

Bedarfsweise ist anschließend im Schritt E vorgesehen, dass die Abstreifsegmente 5 bei festgestelltem Gurtschaden vom Förderband 2 freigestellt werden oder die Förderbandanlage 3 abgeschaltet wird. Ein solches Abschalten ist aber nur dann anzuwenden, wenn ein detektierter Schaden am Förderband 2 vorliegt.

In den Verfahrensschritten A bis D bzw. bei Durchführung des Verfahrens kann vorgesehen sein, dass die Tragwelle 4 derart bewegt wird, dass eine Oberfläche der Abstreifsegmente 5 mit dem Förderband 2 in Kontakt ist.

Wie zuvor erläutert worden ist, zeigt die Fig. 1 einen Ausschnitt einer erfindungsgemäßen Förderbandanlage 3 mit einem Förderband 2 und einem System 1 nach einem der vorgenannten Ausführungsformen. Auch die Förderbandanlage 3 als solches ist Bestandteil der vorliegenden Erfindung.

### Bezugszeichenliste:

- 1: System
- 2: Förderband
- 3: Förderbandanlage
- 4: Tragwelle
- 4': Tragwelle
- 5: Abstreifsegment
- 5': Abstreifsegment
- 6: Abstreifende
- 7: Anstelleinrichtung
- 7': Anstelleinrichtung
- 8: Halterung
- 9: Halterlager für 4
- 10: Sensor
- 11: Bewegungselement
- 12: Vorsprung von 11
- 13: Außenrand von 11
- 14: Kommunikationseinrichtung
- 15: Messeinrichtung
- 16: Steuereinrichtung
- 17: Rasterung
- 18: Feineinstellung
- 19: Kupplung
- 20: Antriebselement
- 21: Antriebsmotor
- 22: Halteende
- 23: Rücklaufabschnitt
- 24: Fördergut
- 25: Förderbandabschnitt
- 26: Umlenkwalze
- 27: Primärabstreifer
- 28: Sekundärabstreifer
- 29: Rastbolzen
- 30: Mehrkantausnehmung
- 31: Indikatormittel

- X: Längsachse von 4

## Patentansprüche

1. System (1) zur Überwachung des Zustands eines Förderbands (2) einer Förderbandanlage (3), mit
- einer Tragwelle (4, 4'),
- mehreren an der Tragwelle (4, 4') angeordneten und Drehmoment übertragend mit der Tragwelle (4, 4') verbundenen Abstreifsegmenten (5, 5'),
- einer ortsfesten Halterung (8) mit einem Haltelager (9), in dem die Tragwelle (4, 4') um eine Längsachse (X) der Tragwelle (4, 4') drehbar gelagert ist,
- einem an der Halterung (8) angeordneten und mit der Tragwelle (4, 4') bewegungsmäßig gekoppelten Bewegungselement (11) und
- einem Sensor (10) zur Überwachung des Zustands des Förderbands (2),
wobei die Abstreifsegmente (5, 5'), die Tragwelle (4, 4'), die Halterung (8) und das Bewegungselement (11) derart zusammenwirken, dass eine auf die Abstreifsegmente (5, 5') wirkende Kraft auf das Bewegungselement (11) übertragen wird und
wobei der Sensor (10) derart angeordnet und ausgebildet ist, dass der Sensor (10) eine charakteristische, insbesondere physikalische Größe des Bewegungselements (11) erfasst,
**dadurch gekennzeichnet, dass**
der Sensor (10) ortsfest an der Halterung (8) angeordnet ist.

2. System nach Anspruch 1, **dadurch gekennzeichnet, dass** der Sensor (10) in einem Gehäuse der Halterung (8) angeordnet ist.

3. System nach einem der vorhergehenden Ansprüche, **dadurch gekennzeichnet, dass** der Sensor (10) und das Bewegungselement (11) derart angeordnet und ausgebildet sind, dass bei einer Bewegung des Bewegungselements (11) das Bewegungselement (11) eine Kraft auf den Sensor (10) ausübt, nämlich gegen den Sensor (10) drückt.

4. System nach einem der vorhergehenden Ansprüche, **dadurch gekennzeichnet, dass** der Sensor (10) derart angeordnet und ausgebildet ist, dass der Sensor (10) eine vom Bewegungselement (11) auf den Sensor (10) ausgeübte Kraft erfasst.

5. System nach einem der vorhergehenden Ansprüche, **dadurch gekennzeichnet, dass** der Sensor (10) einen Dehnungsmessstreifen aufweist oder als Dehnungsmessstreifen ausgebildet ist.

6. System nach einem der vorhergehenden Ansprüche, **dadurch gekennzeichnet, dass** das System (10) eine Kommunikationseinrichtung (14) zur Übertragung von vom Sensor (10) erfassten Informationen aufweist, die beabstandet von der Halterung (8) angeordnet ist, wobei die Kommunikationseinrichtung (14) vom Sensor (10) erfasste Informationen zur Überwachung des Zustandes des Förderbands (2) derart auswertet, dass ein Schaden am Förderband (2) durch die Kommunikationseinrichtung (14) feststellbar ist.

7. System nach Anspruch 6, **dadurch gekennzeichnet, dass** das System (10) eine Messeinrichtung (15) zur Erfassung der Geschwindigkeit des Förderbands (2), der Laufrichtung des Förderbands (2) und/oder der Position des Förderbands (2) aufweist, wobei die Messeinrichtung (15) mit der Kommunikationseinrichtung (14) zur Übertragung von von der Messeinrichtung (15) erfassten Informationen verbunden ist und wobei die Kommunikationseinrichtung (14) derart ausgebildet ist, dass von der Messeinrichtung (15) und vom Sensor (10) empfangene Informationen derart von der Kommunikationseinrichtung (14) miteinander verknüpft werden, dass die Position eines Schadens am Förderband (2) detektierbar ist.

8. System nach Anspruch 7, **dadurch gekennzeichnet, dass** die Messeinrichtung (15) eine Messrolle aufweist, wobei induktive Sensoren (10) der Messeinrichtung (15) an der Messrolle angeordnet sind.

9. System nach Anspruch 6, **dadurch gekennzeichnet, dass** das System (10) eine Steuereinrichtung (16) zur Steuerung der Förderbandanlage (3) aufweist, wobei die Kommunikationseinrichtung (14) derart mit der Steuereinrichtung (16) verbunden ist, dass bei Feststellung eines Schadens am Förderband (2) durch die Kommunikationseinrichtung (14) die Steuereinrichtung (16) das Förderband (2) und/oder die Förderbandanlage (3) abschaltet und/oder die Abstreifsegmente (5, 5') von dem Förderband (2) freistellt.

10. Verfahren zur Überwachung des Zustands eines Förderbands (2) einer Förderbandanlage (3), umfassend:
- Bereitstellen eines Systems (10) nach einem der Ansprüche 1 bis 9 und
- Erfassen einer charakteristischen Größe des Bewegungselements (11).

11. Verfahren nach Anspruch 10, wobei bei einer Bewegung des Bewegungselements (11) das Bewegungselement (11) eine Kraft auf den Sensor (10) ausübt, nämlich gegen den Sensor (10) drückt.

12. Verfahren nach Anspruch 10 oder 11, wobei eine vom Bewegungselement (11) auf den Sensor (10) ausgeübte Kraft erfasst wird.

13. Verfahren nach einem der Ansprüche 10 bis 12, wobei die Kommunikationseinrichtung (14) die von dem Sensor (10) erfassten Informationen zur Überwachung des Zustandes des Förderbands (2) derart auswertet, dass ein Schaden am Förderband (2) durch die Kommunikationseinrichtung (14) feststellbar ist.

14. Verfahren nach einem der Ansprüche 10 bis 13, wobei die Messeinrichtung (15) die Position des Förderbands (2) zumindest mittelbar erfasst.

15. Förderbandanlage (3) mit einem Förderband (2), **gekennzeichnet durch** ein System (10) nach einem der Ansprüche 1 bis 9.

## Claims

1. System (1) for monitoring the condition of a conveyor belt (2) of a conveyor belt system (3), comprising
- a support shaft (4, 4'),
- a plurality of scraper segments (5, 5') arranged on the support shaft (4, 4') and connected to the support shaft (4, 4') in a torque-transmitting manner,
- a stationary mounting (8) with a mounting bearing (9) in which the support shaft (4, 4') is mounted so as to be rotatable about a longitudinal axis (X) of the support shaft (4, 4'),
- a movement element (11) arranged on the mounting (8) and coupled in a movable manner to the support shaft (4, 4'), and
- a sensor (10) for monitoring the condition of the conveyor belt (2),
wherein the scraper segments (5, 5'), the support shaft (4, 4'), the mounting (8) and the movement element (11) interact in such a way that a force acting on the scraper segments (5, 5') is transmitted to the movement element (11), and
wherein the sensor (10) is arranged and configured in such a way that the sensor (10) detects a characteristic, in particular physical, variable of the movement element (11),
**characterized in that**
the sensor (10) is arranged in a fixed position on the mounting (8).

2. System according to claim 1, **characterized in that** the sensor (10) is arranged in a housing of the mounting (8).

3. System according to one of the preceding claims, **characterized in that** the sensor (10) and the movement element (11) are arranged and configured in such a way that when the movement element (11) moves, the movement element (11) exerts a force on the sensor (10), namely pressing against the sensor (10).

4. System according to one of the preceding claims, **characterized in that** the sensor (10) is arranged and designed in such a way that the sensor (10) detects a force exerted on the sensor (10) by the movement element (11).

5. System according to one of the preceding claims, **characterized in that** the sensor (10) has a strain gauge or is configured as a strain gauge.

6. System according to one of the preceding claims, **characterized in that** the system (1) has a communication device (14) for transmitting information detected by the sensor (10), which is arranged at a distance from the mounting (8), wherein the communication device (14) evaluates information detected by the sensor (10) for monitoring the condition of the conveyor belt (2) in such a way that damage to the conveyor belt (2) can be detected by the communication device (14).

7. System according to claim 6, **characterized in that** the system (1) has a measuring device (15) for detecting the speed of the conveyor belt (2), the direction of travel of the conveyor belt (2) and/or the position of the conveyor belt (2), wherein the measuring device (15) is connected to the communication device (14) for transmitting information detected by the measuring device (15), and wherein the communication device (14) is configured such that information received by the measuring device (15) and from the sensor (10) are linked together by the communication device (14) in such a way that the position of damage to the conveyor belt (2) can be detected.

8. System according to claim 7, **characterized in that** the measuring device (15) has a measuring roller, wherein inductive sensors (10) of the measuring device (15) are arranged on the measuring roller.

9. System according to claim 6, **characterized in that** the system (1) has a control device (16) for controlling the conveyor belt system (3), wherein the communication device (14) is connected to the control device (16) in such a way that, when damage to the conveyor belt (2) is detected by the communication device (14), the control device (16) switches off the conveyor belt (2) and/or the conveyor belt system (3) and/or releases the scraper segments (5, 5') from the conveyor belt (2).

10. Method for monitoring the condition of a conveyor belt (2) of a conveyor belt system (3), comprising:
- providing a system (1) according to one of claims 1 to 9, and
- detecting a characteristic variable of the movement element (11).

11. Method according to claim 10, wherein, when the movement element (11) moves, the movement element (11) exerts a force on the sensor (10), namely presses against the sensor (10).

12. Method according to claim 10 or 11, wherein a force exerted by the movement element (11) on the sensor (10) is detected.

13. Method according to one of claims 10 to 12, wherein the communication device (14) evaluates the information detected by the sensor (10) for monitoring the condition of the conveyor belt (2) in such a way that damage to the conveyor belt (2) can be detected by the communication device (14).

14. Method according to one of claims 10 to 13, wherein the measuring device (15) detects the position of the conveyor belt (2) at least indirectly.

15. Conveyor belt system (3) with a conveyor belt (2), **characterized by** a system (1) according to one of claims 1 to 9.

## Revendications

1. Système (1) pour surveiller l'état d'une bande transporteuse (2) d'une installation à bande transporteuse (3), comprenant
- un arbre porteur (4, 4'),
- plusieurs segments de raclage (5, 5') disposés sur l'arbre porteur (4, 4') et reliés à celui-ci de manière à transmettre le couple,
- un support fixe (8) avec un palier de support (9) dans lequel l'arbre porteur (4, 4') est monté de manière à pouvoir tourner autour d'un axe longitudinal (X) de l'arbre porteur (4, 4'),
- un élément de mouvement (11) disposé sur le support (8) et couplé de manière mobile à l'arbre porteur (4, 4') et
- un capteur (10) pour surveiller l'état de la bande transporteuse (2),
les segments de raclage (5, 5'), l'arbre porteur (4, 4'), le support (8) et l'élément de mouvement (11) coopérant de telle sorte qu'une force agissant sur les segments de raclage (5, 5') est transmise à l'élément de mouvement (11) et
le capteur (10) étant disposé et conçu de telle sorte que le capteur (10) détecte une grandeur caractéristique, en particulier physique, de l'élément de mouvement (11),
**caractérisé en ce que**
le capteur (10) est disposé de manière fixe sur le support (8).

2. Système selon la revendication 1, **caractérisé en ce que** le capteur (10) est disposé dans un boîtier du support (8).

3. Système selon l'une des revendications précédentes, **caractérisé en ce que** le capteur (10) et l'élément de mouvement (11) sont disposés et conçus de telle sorte que, lors d'un mouvement de l'élément de mouvement (11), celui-ci exerce une force sur le capteur (10), à savoir qu'il appuie contre le capteur (10).

4. Système selon l'une des revendications précédentes, **caractérisé en ce que** le capteur (10) est disposé et conçu de telle sorte que le capteur (10) détecte une force exercée par l'élément de mouvement (11) sur le capteur (10).

5. Système selon l'une des revendications précédentes, **caractérisé en ce que** le capteur (10) comporte une jauge de contrainte ou est conçu comme une jauge de contrainte.

6. Système selon l'une des revendications précédentes, **caractérisé en ce que** le système (1) comporte un dispositif de communication (14) pour transmettre les informations détectées par le capteur (10), lequel dispositif de communication (14) est disposé à distance du support (8), le dispositif de communication (14) évaluant les informations enregistrées par le capteur (10) pour surveiller l'état de la bande transporteuse (2) de telle sorte qu'un dommage sur la bande transporteuse (2) puisse être détecté par le dispositif de communication (14).

7. Système selon la revendication 6, **caractérisé en ce que** le système (1) comprend un dispositif de mesure (15) pour détecter la vitesse de la bande transporteuse (2), le sens de déplacement de la bande transporteuse (2) et/ou la position de la bande transporteuse (2), le dispositif de mesure (15) étant relié au dispositif de communication (14) pour la transmission des informations enregistrées par le dispositif de mesure (15) et le dispositif de communication (14) étant conçu de telle sorte que les informations reçues par le dispositif de mesure (15) et du capteur (10) sont reliées entre elles par le dispositif de communication (14) de telle sorte que la position d'un dommage sur la bande transporteuse (2) puisse être détectée.

8. Système selon la revendication 7, **caractérisé en ce que** le dispositif de mesure (15) comprend un rouleau de mesure, des capteurs inductifs (10) du dispositif de mesure (15) étant disposés sur le rouleau de mesure.

9. Système selon la revendication 6, **caractérisé en ce que** le système (1) comprend un dispositif de commande (16) pour commander le convoyeur à bande (3), le dispositif de communication (14) étant relié au dispositif de commande (16) de telle sorte que, lorsqu'un dommage sur la bande transporteuse (2) par le dispositif de communication (14), le dispositif de commande (16) arrête la bande transporteuse (2) et/ou le convoyeur à bande (3) et/ou libère les segments de raclage (5, 5') de la bande transporteuse (2).

10. Procédé de surveillance de l'état d'une bande transporteuse (2) d'une installation à bande transporteuse (3), comprenant :
- la mise à disposition d'un système (1) selon l'une des revendications 1 à 9 et
- la détection d'une grandeur caractéristique de l'élément de mouvement (11).

11. Procédé selon la revendication 10, dans lequel, lors d'un mouvement de l'élément de mouvement (11), l'élément de mouvement (11) exerce une force sur le capteur (10), à savoir qu'il appuie contre le capteur (10).

12. Procédé selon la revendication 10 ou 11, dans lequel une force exercée par l'élément de mouvement (11) sur le capteur (10) est détectée.

13. Procédé selon l'une des revendications 10 à 12, dans lequel le dispositif de communication (14) évalue les informations détectées par le capteur (10) pour surveiller l'état de la bande transporteuse (2) de telle sorte qu'un dommage sur la bande transporteuse (2) puisse être détecté par le dispositif de communication (14).

14. Procédé selon l'une des revendications 10 à 13, dans lequel le dispositif de mesure (15) détecte au moins indirectement la position de la bande transporteuse (2).

15. Installation de convoyage (3) avec une bande transporteuse (2), **caractérisée par** un système (1) selon l'une des revendications 1 à 9.
